Europäisches Patentamt

European Patent Office

Office européen des brevets

(11) Veröffentlichungsnummer : **0 085 073**
**B1**

(12) **EUROPÄISCHE PATENTSCHRIFT**

(45) Veröffentlichungstag der Patentschrift :
22.10.86

(51) Int. Cl.⁴ : **H 02 M 7/537**

(21) Anmeldenummer : 82902348.0

(22) Anmeldetag : 29.07.82

(86) Internationale Anmeldenummer :
PCT/DE 82/00155

(87) Internationale Veröffentlichungsnummer :
WO/8300587 (17.02.83 Gazette 83/05)

(54) UMRICHTER.

(30) Priorität : 31.07.81 DE 3130424
30.09.81 DE 3138994
08.02.82 DE 3204225
28.05.82 DE 3220301

(43) Veröffentlichungstag der Anmeldung :
10.08.83 Patentblatt 83/32

(45) Bekanntmachung des Hinweises auf die Patenterteilung : 22.10.86 Patentblatt 86/43

(84) Benannte Vertragsstaaten :
AT BE CH DE FR GB LI NL SE

(56) Entgegenhaltungen :
WO-A-81 /031 02
DE-A- 1 803 486
DE-A- 2 642 272
DE-A- 2 652 275
DE-A- 2 804 694
DE-A- 2 918 314

(73) Patentinhaber : Siemens Aktiengesellschaft Berlin
und München
Wittelsbacherplatz 2
D-8000 München 2 (DE)

(72) Erfinder : KERSCHER, Max
Grasweg 2a
D-8224 Chieming (DE)
Erfinder : KRÖNING, Armin
Wimpersing 1
D-8221 Seebruch (DE)
Erfinder : KRUMMEL, Peter
Bräubergstrasse 6
D-8221 St. Georgen (DE)

## Beschreibung

Die Erfindung betrifft einen Umrichter gemäß Oberbegriff von Anspruch 1.

Ein derartiger Umrichter ist in der nach Art. 54 (3) EPÜ zu berücksichtigenden internationalen Patentanmeldung WO 81/03102 beschrieben ; die periodische Steuerspannung für die Ansteuerung des Ladeschalters wird dort von einem Regler erzeugt, dessen Betriebsspannung abgeschaltet wird, wenn der Wechselrichter nicht schwingt.

Ziel der Erfindung ist, bei einem derartigen Umrichter, die Steuerung des Ladeschalters zu vereinfachen ; insbesondere soll sie so ausgebildet sein, daß sie den Hochsetzsteller bei nicht schwingendem Wechselrichter automatisch abschaltet und möglichst verlustarm arbeitet.

Die erfindungsgemäße Lösung dieser Aufgabe ist in dem kennzeichnenden Teil von Anspruch 1 definiert.

Bei der Erfindung wird zwar der Ladeschalter synchron mit einem der Schalter des Wechselrichters, also mit derselben Schaltfrequenz, angesteuert, wie dies aus DE-A 26 42 272 an sich bekannt ist. Die Erfindung benötigt dazu jedoch keinen besonderen Generator ; vielmehr wird die Steuerspannung für den Ladeschalter direkt von der Rechteckspannung an einem der Schalter des Wechselrichters — z. B. über einen kapazitiven Spannungsteiler — abgeleitet. Daraus resultiert der zusätzliche Vorteil, daß bei stillstehendem Wechselrichter automatisch die Steuerspannung für den Ladeschalter entfällt, der Hochsetzsteller also bei abgeschaltetem Wechselrichter keine Energie mehr liefert. Bei einer Störung braucht daher nur der Wechselrichter abgeschaltet zu werden.

Das Tastverhältnis von Einschaltzeit des Ladeschalters zur Periodendauer, das einerseits die Spannung am Ladekondensator bestimmt, aber auch Rückwirkungen auf die Form des Netzstromes hat, ist durch die Ladezeit eines Verzögerungsspeichers, insbesondere in Form eines Verzögerungskondensators, bestimmt, dessen Entladekreis zur Synchronisierung über einen der Schalter des Wechselrichters geführt ist :

Gemäß einem ersten Ausführungsbeispiel kann die Einschaltzeit des Ladeschalters jeweils bis zum Ende der rechteckigen Spannung an einem der Schalter des Wechselrichters laufen, wobei ihr Beginn durch das Ende der Ladezeit des Verzögerungsspeichers auf einen Ansprechwert bestimmt ist, deren Anfang mit der erwähnten Rechteckspannung beginnt ; die Einschaltzeit ist demnach um die Ladezeit kleiner als die halbe Periodendauer.

Gemäß einer weiteren Ausführungsform kann aber die Einschaltzeit des Ladeschalters auch direkt durch die Ladezeit des Verzögerungsspeichers gegeben sein und mit dem Anfang oder Ende der Rechteckspannung an einem der Schalter des Wechselrichters beginnen.

Unter der Voraussetzung, daß die mittlere Spannung an dem Ladekondensator nur wenig größer als der Spitzenwert der Halbwellenspannung des Gleichrichters sein soll, variiert die Entladespannung (Differenz zwischen den Spannungen an dem Ladekondensator und an dem Gleichrichter) der Ladedrossel innerhalb einer Halbwelle der Netzwechselspannung sehr stark, was bei konstantem Tastverhältnis zu Abweichungen des Netzstromes von der Sinusform führt.

Um dies zu vermeiden, hat das Tastverhältnis in an sich bekannter Weise (DE-OS 26 52 275) im Mittelbereich jeder Halbwelle der Halbwellenspannung des Gleichrichters einen Minimalwert und im ersten und letzten Drittel der Halbwelle einen Maximalwert und ändert sich dazwischen in Steuerabhängigkeit vom Momentanwert dieser Halbwellenspannung oder der Spannung am Ladekondensator. Der Minimalwert ist dabei vorzugsweise so bemessen, daß sich die Ladedrossel bei Nennspannung an dem Ladekondensator und Belastung mit Nennlast vor jeder Aufladung vollständig entladen kann. Ferner ist es vorteilhaft, das Tastverhältnis auch vom Mittelwert der Spannung an dem Ladekondensator abhängig zu machen, um diese Spannung möglichst konstant zu halten.

Der Betrieb des Umrichters mit Halbleiterbauelementen erfordert zusätzlich eine Steuerleistung auf niedrigem Spannungsniveau. Diese wird gemäß einer vorteilhaften Weiterbildung der Erfindung weitgehend verlustfrei mit Hilfe eines Spannungsteilers aus zwei Kondensatoren bereitgestellt, der parallel zu dem Ladeschalter und/ oder einem der Schalter des Wechselrichters liegt und zugleich den Spannungsanstieg bei dem Öffnen des Schalters begrenzt, was bei Verwendung von Transistoren als Schalter zur Ausschaltentlastung beiträgt.

Der von dem Hochsetzsteller gespeiste Wechselrichter kann als Brückenschaltung mit vier Schaltern oder mit zwei Schaltern und zwei Kondensatoren ausgebildet sein ; vorzugsweise handelt es sich dabei jedoch um einen Umschwingwechselrichter mit nur zwei Schaltern und einem Lastzweig, der dem Sekundär-Schalter parallel liegt und in Reihenschaltung einen Umschwingkondensator, die Last, einen Reihenresonanzkreis und die Primärwicklung eines Sättigungstransformators enthält. Der Sättigungstransformator weist dabei Sekundärwicklungen zur abwechselnden Durchsteuerung der beiden Schalter des Wechselrichters auf, wobei die durch den Sättigungstransformator bestimmte Betriebsfrequenz des Wechselrichters etwas über der Resonanzfrequenz des Serienresonanzkreises liegt. Bei Verwendung von Transistoren als Schalter läßt sich dabei in Verbindung mit an sich bekannten antiparallel geschalteten Rückstromdioden eine Überlappung der Schaltzeiten der Transistoren mit Sicherheit vermeiden. Der Startimpuls wird von einem Startkondensator über eine Trigger-Diode dem Primärschalter des Wechselrichters zugeführt.

Der Umrichter ist vor allem für den Betrieb von Entladungslampen mit vorheizbaren Elektroden geeignet, wobei der Kondensator des Serienresonanzkreises jeweils zwischen den beiden Elektroden einer Entladungslampe liegt. Hierbei ist bei dauernd zündunwilliger Lampe für eine Abschaltung des Umrichters zu sorgen.

Dazu dient eine bistabile Schalteinrichtung, die durch ein Auslösesignal durchgeschaltet wird und einen Haltestromkreis aufweist, durch den dieser Schaltzustand bis zur Unterbrechung des Haltestromkreises aufrechterhalten wird. Erfindungsgemäß liegt eine der Elektroden der Entladungslampe oder die Reihenschaltung zweier Elektroden bei einer Zweilampenschaltung in diesem Haltestromkreis und im Ladestromkreis eines Startkondensators. Bei einem Lampenwechsel wird somit automatisch der Abschaltzustand beendet und der Lampenbetrieb wieder aufgenommen, ohne daß dazu die ganze Beleuchtungsanlage abgeschaltet zu werden braucht.

Vorzugsweise dient als Schalteinrichtung ein Stop-Thyristor, der den Startkondensator und eine Abschaltwicklung des Sättigungstransformators bei dauernd zündunwilliger Lampe kurzschließt und dadurch den Wechselrichter — und damit mittelbar auch den Hochsetzsteller — außer Betrieb setzt. Dieser Zustand bleibt bis zur Unterbrechung des Haltestromes des Stop-Thyristors, dessen Haltekreis hierzu über eine Elektrode der Entladungslampe und einen Vorwiderstand an die Versorgungsspannung, beispielsweise den Ladekondensator, gelegt ist : Beim Wechseln der Lampe wird dieser Stromkreis zwangsläufig unterbrochen und der Kurzschluß aufgehoben. Nach dem Einsetzen einer neuen Lampe kann sich der Startkondensator wieder aufladen und der Umrichter nimmt automatisch seinen Betrieb wieder auf.

Die Erfindung wird anhand zweier Ausführungsbeispiele näher erläutert ; es zeigen

Figur 1 ein erstes Ausführungsbeispiel,

Figur 2 ein zweites Ausführungsbeispiel, das sich nur durch den Steuerteil links der strichpunktierten Mittellinie von der Ausführungsform nach Fig. 1 unterscheidet,

Figur 3 den Verlauf der Halbwellenspannung des Gleichrichters G (gestrichelt) und den Verlauf des Stromes $I_L$ durch die Ladedrossel,

Figur 4a den Verlauf der Spannung $U_L$ an der Ladedrossel,

Figur 4b den Strom $I_L$ durch die Ladedrossel,

Figur 4c die Phasenlage der synchronisierenden Rechteckspannung $U_{T1}$ beim Ausführungsbeispiel nach Fig. 1,

Figur 4d die Phasenlage der synchronisierenden Rechteckspannung am Primärtransistor beim Ausführungsbeispiel nach Fig. 2, und

Figur 5 ein drittes Ausführungsbeispiel.

Ein Gleichrichter G in Zweiwegschaltung ist eingangsseitig über ein nicht dargestelltes Filter an ein Wechselspannungsnetz (220 Volt/50 Hertz) angeschlossen und speist ausgangsseitig über eine Ladedrossel L und eine Ladediode D einen Ladekondensator C. Parallel zu diesem ist die Reihenschaltung aus zwei abwechselnd durchschaltenden Transistoren eines Wechselrichters angeschlossen ; der der Ladediode D benachbarte Transistor T3 wird im folgenden als Sekundärtransistor und der andere Transistor T1 als Primärtransistor bezeichnet. Parallel zu dem Sekundärtransistor T3 liegt ein Lastzweig mit einer Entladungslampe E, einem Serienresonanzkreis C2, L2, einem Umschwingkondensator C1 und der Primärwicklung L30 eines Sättigungstransformators in Reihenschaltung, wobei der Kondensator C2 des Serienresonanzkreises zwischen den beiden vorheizbaren Elektroden der Entladungslampe E liegt, die mit einer Elektrode direkt an den Ladekondensator C angeschlossen ist.

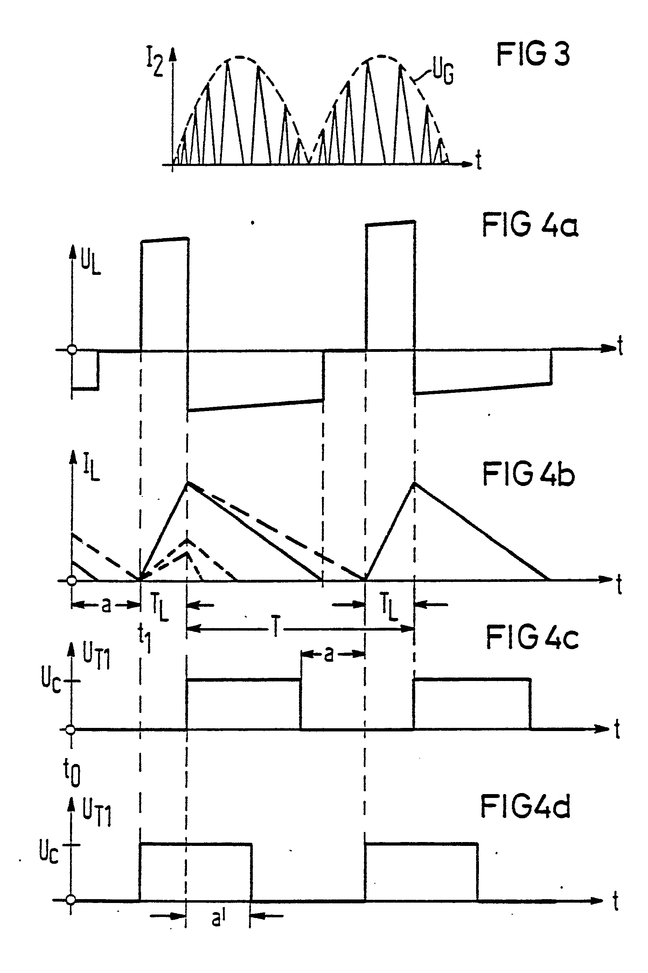

Der Sättigungstransformator weist zwei Sekundärwicklungen L31, L32 sowie eine Abschaltwicklung L33 auf ; die Sekundärwicklungen L31, L32 sind derart in die Steuerkreise von Primär- und Sekundärtransistor T1, T3 geschaltet, daß diese jeweils während der Ummagnetisierungszeit des Sättigungstransformators abwechselnd durchgesteuert werden. Hierbei ist der Sättigungstransformator so bemessen, daß die durch ihn bestimmte Betriebsfrequenz des Wechselrichters etwas über der Resonanzfrequenz des Serienresonanzkreises liegt : Dadurch entstehen Lücken zwischen aufeinanderfolgenden Durchsteuerimpulsen, so daß ein gleichzeitiges Leiten von Primär- und Sekundärtransistor und damit ein Kurzschluß der Spannung an dem Ladekondensator C ausgeschlossen ist. Für die Stromführung während der gleichzeitigen Sperrung beider Transistoren sind Rückstromdioden D1, D2 parallel zu jedem der Transistoren vorgesehen. Während der Durchschaltezeit des Primärtransistors T1 liegt die Spannung des Ladekondensators C an dem Lastzweig und führt zu einer Aufladung des Umschwingkondensators C1 mit der in der Figur angegebenen Polarität. Nach dem Sperren von T1 fließt der Strom über den Lastzweig, getrieben durch die Drossel L2 des Serienresonanzkreises, über die Rückstromdiode D2 weiter, bis T3 durchschaltet : Dann entlädt sich der Umschwingkondensator C1 über T3 und den Lastzweig, bis T3 wieder sperrt. Danach fließt der Laststrom in der gleichen Richtung über den Ladekondensator C und Rückstromdiode D1 bis zur erneuten Durchschaltung von T1 weiter. Der Verlauf der Rechteckspannung $U_{T1}$ an dem Primärtransistor ist — idealisiert — in Fig. 4c, 4d dargestellt.

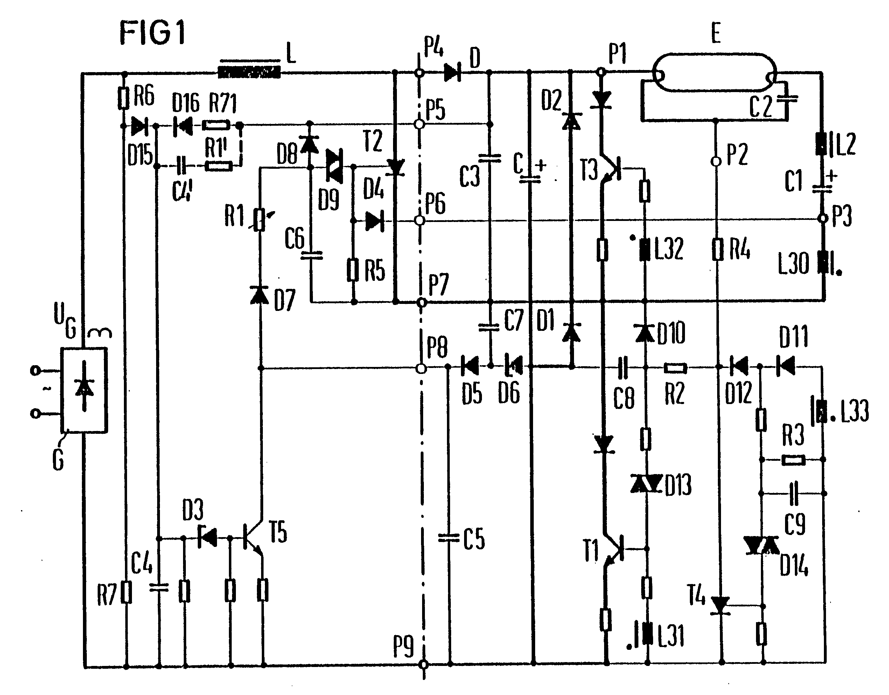

Die beim Betrieb des Wechselrichters dem Ladekondensator C entnommene Energie wird diesem vom Gleichrichter G über die Ladedrossel L und die Ladediode D zugeführt. Beim Ausführungsbeispiel nach Fig. 1 bilden hierzu der Primärtransistor T1 und ein Ladethyristor T2 in Serienschaltung einen Ladeschalter, über den die Ladedrossel L dem Gleichrichter G parallel geschaltet ist. Vorzugsweise handelt es sich bei dem Ladethyristor T2 um eine Ausführung, die in Rückwärtsrichtung nicht sperrt, sondern Diodenverhalten hat : In diesem Fall kann dann die Rückstromdiode D2 entfallen, da ihre Funktion durch den Ladethyristor T2 — in Serienschaltung mit D — mit übernommen wird.

Eine Zündung des Ladethyristors T2 ist nur während der Durchschaltzeiten des Primärtransistors T1 des Wechselrichters möglich : Dementsprechend wird er im Zeitpunkt t1 mit einer Verzögerungszeit a nach dem Durchschaltzeitpunkt t0 des Primärtransistors T1 gezündet (vgl. Fig. 4a bis 4c). Bis zur erneuten Sperrung von T1 liegt die Ladedrossel an der Halbwellenspannung des Gleichrichters G und nimmt Energie auf, die sie nach dem Sperren von T1 über die Ladediode D an den Ladekondensator C bzw. den daran angeschlossenen Wechselrichter und seinen Verbraucher abgibt. Das Auf- und Entladen der Ladedrossel verläuft somit synchron zu den Umschaltvorgängen des Wechselrichters, der beispielsweise mit 40 kHz schwingt. Dementsprechend oft wird die Ladedrossel während einer Halbwelle der vom Gleichrichter G gelieferten Halbwellenspannung auf- und entladen, wobei der Strom $I_L$ durch die Ladedrossel den schematisch dargestellten Verlauf hat. Die Stromimpulse werden von dem Filter vor dem Gleichrichter zu einem etwa sinusförmigen Netzstrom integriert, wobei das Filter wegen der hohen Schaltfrequenz relativ klein bemessen sein kann.

In Fig. 4a und 4b sind der Verlauf der Spannung $U_L$ an der Ladedrossel L und ihr Strom $I_L$ während eines Auf- und Entladezyklus vergrößert dargestellt. Die Ladedrossel L wird immer gegen den Momentanwert der Halbwellenspannung aufgeladen, weshalb der Anstieg des Ladestromes entsprechend variiert. Für die Entladung der Drossel ist dagegen jeweils die Differenz zwischen dem Momentanwert der Halbwellenspannung und der praktisch konstanten Spannung an dem Ladekondensator C maßgebend, so daß sich die längste Entladezeit bei maximalem Momentanwert ergibt. Das Tastverhältnis V von Einschaltzeit $T_L$ des Ladeschalters zur Periodendauer T hängt von der Verzögerungszeit a der Zündung des Ladethyristors T2 gegenüber dem Durchschaltzeitpunkt t0 des Primärtransistors T1 ab und ist grundsätzlich so zu wählen, daß die von der Ladedrossel maximal aufgenommene Energie — also zum Zeitpunkt des Maximalwertes der Halbwellenspannung — vor der nächsten Aufladung vollständig über die Ladediode D abfließen kann. Nur dann gibt es beim Zünden des Ladethyristors T2 keinen Rückstrom über die Ladediode D und damit ein verlustfreies Schalten des Ladethyristors ; ferner ist nur dann die kleinstmögliche Bemessung der Ladedrossel erreichbar.

Der Ladethyristor T2 wird synchron zu den Umschaltvorgängen des Wechselrichters gesteuert. Hierzu liegt dessen Steuerstrecke über eine Trigger-Diode D9 einem Verzögerungskondensator C6 parallel, der einerseits über eine Entladediode D8 parallel zu dem Sekundärtransistor T3 liegt und über den Primärtransistor T1, einen einstellbaren Entladewiderstand R1 und eine Entkopplungsdiode D7 an eine Steuerspannungsquelle angeschlossen ist. Letztere besteht aus einem Steuertransistor T5 und einem parallel dazu angeordnetem Speicherkondensator C5, der zusammen mit einer Diode D5 und einem Teilerkondensator C7 einen dem Primärtransistor T1 parallel liegenden Spannungsteiler bildet, der dementsprechend periodisch über T3 aufgeladen und über T1 entladen wird : Auf diese Weise entsteht an C5 eine praktisch verlustfrei von der hohen Spannung am Ladekondensator C abgeleitete niedrige Betriebsspannung, deren Höhe durch eine Zener-Diode D6 begrenzt ist, die zugleich der Entladung von C7 dient. C5 und C7 begrenzen zugleich den Spannungsanstieg an T1 und bringen so eine Ausschaltentlastung.

Bei durchgesteuertem Sekundärtransistor T3 wird der Ladethyristor T2 über R5, D4 schnell gesperrt und der Verzögerungskondensator C6 über D8 entladen. Seine Aufladung beginnt damit ausgehend von einem definierten Potential mit Beginn der Durchsteuerung des Primärtransistors T1 im Zeitpunkt t0 : Von da an entlädt sich nämlich der Speicherkondensator C5 über D7, R1 und den Primärtransistor T1 in den Verzögerungskondensator C6, dessen Spannung nach einer an R1 einstellbaren Verzögerungszeit a einen Wert erreicht, bei dem die Trigger-Diode D9 durchschaltet und den Ladethyristor T2 zündet. Diese einfache, synchronisierte Ansteuerung des Ladethyristors ist vor allem auch bemerkenswert, weil sich der Verzögerungskondensator C6 auf einem höheren Potential befindet als der Speicherkondensator C5.

An dem Speicherkondensator C5 liegt eine im wesentlichen konstante Betriebsspannung, die auch für eine konstante Zeitverzögerung a sorgt. Die damit verbundenen, unterschiedlich langen Entladezeiten der Ladedrossel führen aber zu einer Abweichung des vom Wechselspannungsnetz aufgenommenen Stromes von der Sinusform, die umso größer ist, je weniger die Spannung am Ladekondensator über dem Maximalwert der Halbwellenspannung des Gleichrichters liegt. Im Ergebnis ist der Netzstrom zu Beginn und zum Ende jeder Halbwelle etwas kleiner und im mittleren Bereich größer als der Wert eines sinusförmigen Stromes. Eine weitgehende Annäherung läßt sich jedoch durch eine Veränderung der Betriebsspannung an dem Speicherkondensator C5 abhängig von der Größe der Halbwellenspannung erzielen. Hierzu ist dem C5 der Steuertransistor T5 parallelgeschaltet, dessen Steuerstrecke über eine Zener-Diode D3 an ein RC-Glied und dieses über eine Diode D15 an R6, R7 parallel zu dem Gleichrichter G angeschlossen ist. Die Schaltung ist dabei so bemessen, daß Transistor T5 nur im mittleren Bereich jeder Halbwelle der Halbwellenspannung des Gleichrichters G über die Zener-Diode D3 etwas durchgesteuert wird und dadurch die Spannung an dem Speicherkondensator C5 herabsetzt. Dadurch ergibt sich in diesem Mittelbereich eine mit dem Momentanwert der Halbwellenspannung steigende Verzögerungszeit a, was kürzere Stromimpulse und damit eine reduzierte Energieaufnahme der Ladedrossel zur Folge hat. Damit ist es andererseits möglich, im Bereich des Beginns und Endes jeder Halbwelle die Verzögerungszeit kleiner zu wählen und damit die vom Netz aufgenommenen Stromimpulse zu vergrößern, ohne daß sich die gewünschte Betriebsart der vollständigen Rückmagnetisierung der Ladedrossel ändert. Aus diesen Maßnahmen resultiert dann ein Netzstrom, der der Sinusform gut angenähert ist.

Die Verzögerungszeit a wird ferner abhängig von dem Verlauf und der Größe der Spannung an dem Ladekondensator C beeinflußt; hierzu liegt das RC-Glied an der Steuerstrecke des Steuertransistors T5 über eine Diode D16 und einen Widerstand R71 auch an dem Ladekondensator C. Der Kondensator C4 des RC-Gliedes sorgt dabei für eine zusätzliche Glättung und eine solche Phasenverschiebung, daß die etwas wellige (100 Hz) Gleichspannung an ihm etwa synchron zu der Netzwechselspannung verläuft: Steigt somit die Spannung an dem Ladekondensator C über einen durch den Spannungsteiler und die Zener-Diode D3 bestimmten Wert, so wird über T5 die Verzögerungszeit vergrößert und somit die Ladedauer der Ladedrossel im mittleren Bereich jeder Halbwelle der Netzwechselspannung vermindert, was einer zusätzlichen Verbesserung der Sinusform des Netzstromes entgegenkommt.

Durch die beschriebene Regelung kann die Spannung an dem Ladekondensator einen bestimmten Grenzwert auch dann nicht überschreiten, wenn an ihn keine oder eine zu kleine Last, beispielsweise eine Lampe zu niedriger Leistung, angeschlossen ist.

Unter Weglassung von D15 und D16 kann man C4 über R71 und parallel dazu über R1' und C4' — gestrichelt dargestellt — direkt an den Ladekondensator C anschließen: Auch so erhält man eine Regelung der Spannung an C und wegen der Welligkeit dieser Spannung zugleich — bei entsprechender Bemessung von R1' und C4' — eine Kürzung der Ladezeit der Ladedrossel L im Mittelbereich der Halbwellen der Netzwechselspannung und damit eine bessere Annäherung des Netzstromes an die Sinusform.

Der Umschwingwechselrichter und anschließend der Hochsetzsteller beginnen erst zu arbeiten, wenn die Spannung an einem Startkondensator C8 einen solchen Wert erreicht hat, daß seine Energie über eine Trigger-Diode D13 auf die Steuerstrecke des Primärtransistors T1 geschaltet wird und dieser damit durchschaltet. Der Startkondensator C8 liegt hierzu einerseits über Widerstände R2, R4 und eine Elektrode der Lampe E an dem Ladekondensator C und andererseits über eine Diode D10 parallel zur Schaltstrecke des Primärtransistors T1: Nach dem Anlegen der Netzwechselspannung an den Gleichrichter lädt sich der Ladekondensator C über Ladedrossel und Ladediode und damit auch der Startkondensator C8 auf, bis der Primärtransistor T1 durchgezündet wird; dann wird zugleich der Startkondensator über D10 wieder entladen, so daß diese Startschaltung während des periodischen Schwingens des Wechselrichters nicht mehr eingreifen kann.

Beim Betrieb des Umrichters mit einer Entladungslampe E ist für eine Abschaltung des Umrichters zu sorgen, wenn die Entladungslampe dauernd startunwillig ist, also es nur zu wiederholten, erfolglosen Startversuchen kommt. Zu diesem Zweck ist ein Stop-Thyristor T4 vorgesehen, dem eine Abschaltwicklung L33 des Sättigungstransformators über Dioden D11, D12 und der Startkondensator C8 über R2 parallelgeschaltet ist und der seinen Haltestrom über die dem Ladekondensator C benachbarte Elektrode der Entladungslampe und einen Vorwiderstand R4 erhält.

An die Abschaltwicklung L33 ist über die Diode D11 auch ein RC-Glied R3, C9 in Parallelschaltung angeschlossen, das wiederum über eine Trigger-Diode D14 der Steuerstrecke des Stop-Thyristors T4 parallel liegt. Die Funktion und Bemessung dieser Schaltung basiert auf der Tatsache, daß die Amplitude des über den Lastzweig mit der Entladungslampe fließenden und von der Abschaltwicklung L33 erfaßten Stromes bei ungezündeter Lampe (Resonanzfall) wesentlich größer ist als bei gezündeter Lampe (gedämpfter Resonanzkreis): Nach einer durch die Bemessung vorgebbaren Anzahl vergeblicher Startversuche hat sich C9 so weit aufgeladen, daß der Stop-Thyristor T4 über die Trigger-Diode D14 durchzündet und die Abschaltwicklung L33 kurzschließt. Damit entfallen die Steuerspannungen für die Transistoren des Wechselrichters und der Betrieb des Wechselrichters ist unterbrochen. Zu einer solchen Abschaltung führen jedoch weder die normalen Zündversuche noch der normale Lampenstrom, da hierbei die Spannung an C9 nicht den zur Durchsteuerung der Trigger-Diode D14 erforderlichen Wert erreicht.

Wegen der Synchronsteuerung des Hochsetzstellers abhängig von der Rechteckspannung an den Schaltern des Wechselrichters, wird der Hochsetzsteller automatisch mit dem Wechselrichter ab- und nach dem Start des Wechselrichters wieder eingeschaltet.

Der Wechselrichter bleibt abgeschaltet, bis der Haltestrom des Stop-Thyristors T4 unterbrochen und dieser daher wieder in den Sperrzustand übergehen kann. Hierzu kann beispielsweise die Netzwechselspannung abgeschaltet werden. Sehr häufig ist jedoch eine Abschaltung das Resultat einer schadhaften Lampe, die ohne Abschaltung der Netzspannung gewechselt wird. Da auch der Stromkreis des Startkondensators C8 über eine Elektrode der Lampe geführt ist, schwingt der Umrichter nach dem Einsetzen einer neuen Lampe automatisch wieder an.

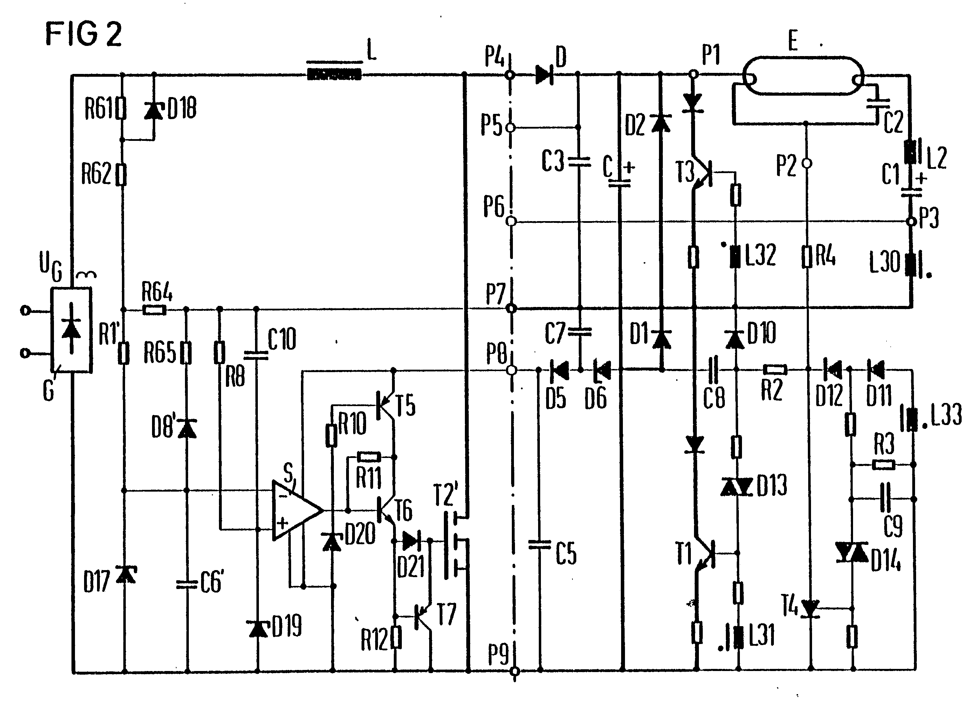

Das Aufführungsbeispiel nach Fig. 2 unterscheidet sich von dem nach Fig. 1 lediglich durch die Ansteuerung des Ladeschalters T2', der hier als MOS-Leistungstransistor ausgeführt ist; die Schaltung rechts der strichpunktierten Linie ist mit dem entsprechenden Teil der Fig. 1 identisch.

Zur Ansteuerung dient ein Komparator S, dessen Durchschalteingang + an einer Zener-Diode D19 liegt und über einen Widerstand R8 und parallelen Kondensator C10 dem Primärtransistor T1 parallelgeschaltet ist. Der Sperreingang — des Komparators liegt an einem Verzögerungskondensator C6', der über eine Entladediode D8' und einen Widerstand R65 ebenfalls dem Primärtransistor T1 parallel geschaltet ist. Zur Aufladung ist der Verzögerungskondensator C6' über einen Ladewiderstand R1' einerseits über einen nichtlinearen Widerstand R61, R62, Zener-Diode D18 an den Gleichrichter G und andererseits über einen Widerstand R64 — bei durchgeschaltetem Sekundärtransistor T3 — an den Ladekondensator C angeschlossen. Die durch eine Zener-Diode D17 begrenzte Spannung an dem Verzögerungskondensator C6' ist somit von dem Momentanwert der Halbwellenspannung des Gleichrichters und der Spannung an dem Ladekondensator C abhängig. Die Zener-Diode D18 sorgt dabei dafür, daß die Aufladung von C6' abhängig von der Halbwellenspannung bei kleinem Momentanwert, also bei noch nicht leitender Zener-Diode D18, im Vergleich zur Aufladung durch die Spannung am Ladekondensator C zurücktritt. Bei größeren Momentanwerten der Halbwellenspannung und damit leitender Zener-Diode D18 überwiegt dagegen der Einfluß der Halbwellenspannung auf die Ladung von C6'.

Der parallel zum Primärtransistor T1 liegende Speicherkondensator C5 liefert die Betriebsspannung für den Komparator S und den Durchsteuerstrom für den Ladeschalter T2' und wird auf diese Weise periodisch entladen. Der Durchsteuerstrom für T2' fließt dabei über Transistoren T5 und T6 sowie eine Diode D21, wobei ein Transistor T7 gesperrt ist. Ein solcher Durchsteuerimpuls setzt voraus, daß die Spannung an C5 mindestens einen durch eine Zener-Diode D20 bestimmten Wert hat, damit der Transistor T5 durchgesteuert ist. Ferner muß der Transistor T6 von dem Komparator S mit positivem Potential angesteuert sein, was der Fall ist, wenn das Signal an dem Durchsteuereingang + größer als das an dem Sperreingang — ist. Ist Transistor T6 durch den Komparator durch Minussignal gesperrt, dann entfällt die Sperrvorspannung an R12 für den Transistor T7, über den dann ein Sperrimpuls für T2' fließt.

Zur Erläuterung der synchronen Ansteuerung des Ladeschalters T2' wird auf Fig. 4b und 4d Bezug genommen : Bei der Sperrung des Primärtransistors T1 im Zeitpunkt t1 liegt am Durchsteuereingang + des Komparators S sofort eine durch die Zener-Diode D19 gegebene, positive Referenzspannung. Die Spannung am Sperreingang — steigt dagegen erst langsam mit der Aufladung des zuvor entladenen Verzögerungskondensators C6' gegen einen durch die Halbwellenspannung $U_G$ und die Spannung am Ladekondensator C gegebenen Wert an. Somit ist das an dem Durchsteuereingang + liegende Signal größer, so daß der Komparator S vom Zeitpunkt t1 an ein positives Durchsteuersignal liefert und damit der Ladeschalter T2' geschlossen ist. Nach einer von der Halbwellenspannung $U_G$ und der Spannung an dem Ladekondensator abhängigen Zeit $T_L$ ist das Signal an dem Sperreingang — des Komparators S soweit angewachsen, daß jener umschaltet und ein negatives Sperrsignal an seinem Ausgang liefert, durch das der Ladeschalter T2' geöffnet wird.

Dieser Schaltzustand bleibt erhalten bis zur nächsten Sperrung von T1 : Solange T1 noch gesperrt ist, liegen beide Eingänge des Komparators S über R1', R64 bzw. über R8 und weiter über D10, R2 und R4 an der Spannung des Ladekondensators C, wobei die Zener-Dioden D17 und D19 so bemessen sind, daß die Spannung am Sperreingang — größer ist als am Durchsteuereingang. Auf diese Weise ist auch eine Abschaltung von T2' bei dauernder Abschaltung des Wechselrichters gewährleistet.

Während der folgenden Durchsteuerzeit des Primärtransistors T1 wird der Verzögerungskondensator C6' über D8' und Widerstand R65 entladen, wobei die Zeitkonstante so groß ist, daß das Signal an C6' während der gesamten Durchsteuerzeit von T1 nicht unter die Spannung am Durchsteuereingang + fällt. Letztere Spannung ist zunächst durch die Entladung von C10 über D19 und R8 bestimmt und daher negativ ; nach Entladung von C10 liegt das Potential am Durchsteuereingang + um den Spannungsabfall von D8' und R65 unter dem am Sperreingang —, so daß der Komparator S bis zur erneuten Sperrung von T1 den Ladeschalter T2' gesperrt hält.

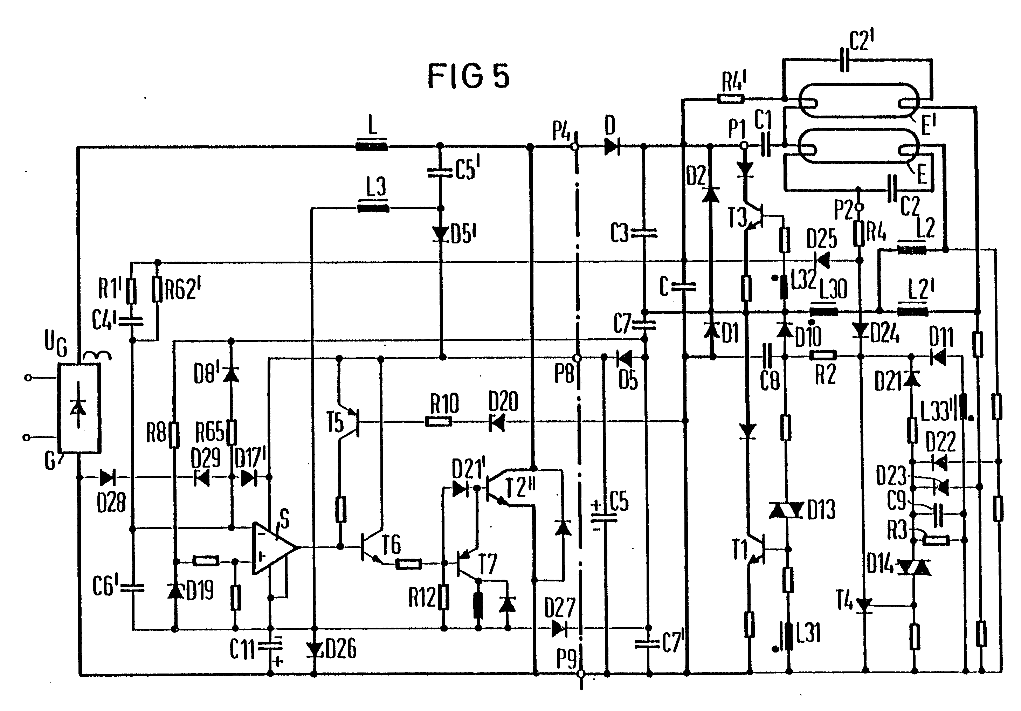

Das dritte Ausführungsbeispiel nach Fig. 5 wird im folgenden nur soweit behandelt, als es sich von dem nach Fig. 2 unterscheidet.

Der Hochsetzsteller — links der strichpunktierten Linie — arbeitet mit einem bipolaren Transistor T2'', für dessen Steuerung eine negative Betriebsspannung erforderlich ist. Diese und die positive Betriebsspannung an dem Speicherkondensator C5 werden auf folgende, verlustarme Weise erzeugt.

Parallel zu dem Primärtransistor T1 des Wechselrichters liegt ein kapazitiver Spannungsteiler mit den Kondensatoren C7, C7', die sich bei gesperrtem T1 positiv aufladen, wobei der größte Teil der hohen Sperrspannung an T1 auf C7 mit der wesentlich kleineren Kapazität entfällt. Bei Durchsteuerung von T1 entlädt sich dann C7 in C7' und — bei entsprechender Größe seiner Spannung — über D27 in den Speicherkondensator C11, dessen Spannung durch eine Zener-Diode D26 begrenzt ist. Nach dem Anschwingen des Wechselrichters laden sich somit die Speicherkondensatoren C5 und C11 mit der angegebenen Polarität auf die positive bzw. negative Betriebsspannung auf ; an C7' entsteht dagegen eine Rechteckspannung, die nach oben durch die Spannung an C5 und nach unten durch die an C11 begrenzt ist und zur Steuerung des Komparators S dient. Der Hochsetzsteller nimmt allerdings erst dann seinen Betrieb auf, wenn die positive Betriebsspannung an C5 ausreichend groß ist und somit T5 über Zener-Diode D20 und R10 durchgesteuert wird.

Der Speicherkondensator C5 bildet mit Diode D5' und Teilerkondensator C5' eine Reihenschaltung, die parallel zum Ladeschalter T2" angeordnet ist und als Ausschaltentlastung wirkt. Bei gesperrtem T2" laden sich somit diese beiden Kondensatoren auf, wobei der Großteil der Spannung an dem wesentlich kleiner bemessenen C5' liegt. Bei der folgenden Durchsteuerung von T2" entlädt sich dann C5' über Umschwingdrossel L3 in den Kondensator C11, der die negative Betriebsspannung liefert.

Der Verzögerungskondensator C6' am Minuseingang des Komparators S ist hier über den Ladewiderstand R1' in Reihe mit einem Kondensator C4' und parallel zu beiden über einen Widerstand R62' nur dem Ladekondensator C parallel geschaltet. Die Spannung an C6' ist somit sowohl vom Mittelwert — über R62' — als auch von dem Momentanwert — über C4' und R1' — der Spannung an dem Ladekondensator C abhängig. Der über C4' fließende, von der Welligkeit am Ladekondensator C abhängige Wechselstrom könnte zu einer Polaritätsumkehr der Spannung an C6' führen, was durch die Dioden D28, D29 verhindert wird ; in positiver Richtung ist die Spannung an C6' durch D17' auf den Wert der positiven Betriebsspannung an C5 begrenzt.

Die Ansteuerung des Ladeschalters T2" abhängig von der Spannung am Verzögerungskondensator C6 ist funktionsgleich wie bei der Ausführung nach Fig. 2 ; jedoch wird der Komparator S über R8 bzw. R65 und D8' nicht mit der hohen Rechteckspannung am Primärtransistor T1 sondern nur mit einem Bruchteil davon — am Steuerkondensator C7' abgegriffen — synchronisiert.

Im Ergebnis ist die Durchsteuerzeit von T2" und damit die Ladezeit der Ladedrossel L umso länger, je niedriger die Spannung am Ladekondensator C ist. Diese regelt sich auf einen Wert ein, der mit Hilfe des Spannungsteilers am Positiveingang des Komparators S einstellbar ist. Durch entsprechende Bemessung des RC-Gliedes R1', C4' erhält man eine solche Phasenschiebung, daß die Ladezeit der Ladedrossel und damit die Stromaufnahme vom Netz gerade im Mittelbereich der Halbwellen der Netzwechselspannung am geringsten ist, wodurch sich eine gute Annäherung des Netzstromes an die Sinusform ergibt.

Der Wechselrichter — rechts der strichpunktierten Linie — ist in diesem Ausführungsbeispiel mit zwei parallel geschalteten Lampen E, E' mit jeweils zugeordneten Serienresonanzkreisen C2, L2 und C2', L2' belastet. Wichtig ist hierbei die symmetrische Speisung der Lampenstromkreise, bei der der Umschwingkondensator C1 am Verbindungspunkt der Elektroden der beiden Lampen angeschlossen ist. Der Haltestromkreis des Stop-Thyristors T4 und der Aufladekreis für den Startkondensator C8 verläuft dagegen über R4, R4' und die unmittelbar miteinander in Reihe geschalteten Elektroden der Lampen.

Zur Abschaltung bei dauernd zündunwilliger Lampe werden hier die Spannungen an den Drosseln L2, L2' der Serienresonanzkreise ausgewertet und über Spannungsteiler und Entkopplungsdioden D22, D23 nach Art eines ODER-Gatters dem RC-Glied C9, R3 zugeführt. Diese Spannungen sind bei dauernd zündunwilliger Lampe — im Resonanzfall — so groß, daß der Stop-Thyristor T4 über die Trigger-Diode D14 gezündet wird, der dann bis zu einem Auswechseln der schadhaften Lampe durchgesteuert bleibt. Er schließt damit die Abschaltwicklung L33' des Sättigungstransformators über Diode D21 und den Startkondensator C8 kurz und schaltet so den Wechselrichter ab. Da die Dioden D22 und D23 nach Art eines ODER-Gatters an das RC-Glied R3, C9 angeschlossen sind, kann die Abschaltbedingung durch jede der beiden parallel geschalteten Lampen — oder auch durch beide gleichzeitig — herbeigeführt werden.

Der Abschaltzustand bleibt erhalten, bis eine der beiden Lampen ausgewechselt und dadurch der Haltestromkreis von T4 unterbrochen wird. Mit dem Einsetzen einer neuen Lampe kann sich dann der Startkondensator C8 über R2, R4 und die in Reihe geschalteten Elektroden der beiden Lampen E, E' aufladen, so daß zunächst der Wechselrichter wieder anschwingt ; kurz danach stehen ausreichend große Betriebsspannungen an C5 und C11 für den Hochsetzsteller zur Verfügung, so daß auch dieser automatisch den Betrieb wieder aufnimmt.

Eine gealterte Lampe verhält sich wie ein Gleichrichter, ohne daß zuvor die Polarität festliegen würde. Dementsprechend kann an dem Umschwingkondensator C1 eine sehr hohe positive oder negative Spannung von rund 1000 V auftreten, durch die die Überwachungsschaltung, insbesondere der Stop-Thyristor T4 gefährdet wäre. Daher dient eine Diode D24 in Reihe zu T4 zum Schutz bei negativer Überspannung an C1 ; eine Diode D25 hält dagegen das Potential bei positiver Überspannung auf dem Wert der Spannung an dem Ladekondensator C.

Auch die hier beschriebene Variante der Überwachung und Abschaltung ist bei den Ausführungsbeispielen nach Fig. 1 und 2 mit Vorteil anwendbar.


**Patentansprüche**

1. Umrichter
mit einem Hochsetzsteller

mit einem Ladekondensator (C), der über eine Ladediode (D), eine Ladedrossel (L) und einen Gleichrichter (G) an ein Wechselspannungsnetz angeschlossen ist, wobei der Gleichrichter eine ungeglättete Halbwellenspannung liefert,

mit einem Ladeschalter (T2, T2'), über den die Ladedrossel (D) an den Gleichrichter (G) schaltbar ist,

mit einem Steuerteil, das eine periodische Steuerspannung zur Steuerung des Ladeschalters (T2, T2') liefert, deren Tastverhältnis von einer Steuergröße abhängt,

mit einem Wechselrichter

mit zwei abwechselnd durchgesteuerten Schaltern, nachfolgend als Primärschalter (T1) und Sekundärschalter (T3) bezeichnet, die in Reihenschaltung parallel zu dem ladekondensator (C) liegen,

wobei die Schaltfrequenz des Ladeschalters und der Schalter des Wechselrichters größer als die Frequenz des Wechselspannungsnetzes ist, dadurch gekennzeichnet,

daß der Steuerteil für den Ladeschalter (T2, T2', T2") durch die Rechteckspannung an einem der Schalter (T1, T3) des Wechselrichters synchronisiert ist, und

daß das Tastverhältnis (V) von Einschaltzeit ($T_L$) des Ladeschalters (T2, T2') zur Periodendauer (T) durch die von der Steuergröße abhängige Ladezeit eines Verzögerungsspeichers (C6, C6') bestimmt ist, dessen Entladekreis über einen Schalter (T1 ; T3) des Wechselrichters geführt ist.

2. Umrichter nach Anspruch 1, dadurch gekennzeichnet, daß im Ladekreis des Verzögerungsspeichers (C6) ein Ladewiderstand (R1), eine Entkopplungsdiode (D7), einer der Schalter (T1) des Wechselrichters, sowie eine Hilfsspannungsquelle liegen, und daß letztere von einem Speicherkondensator (C5) und parallel dazu von einem Steuertransistor (T5) gebildet ist, der in Steuerabhängigkeit von der Steuergröße steht (Fig. 1).

3. Umrichter nach Anspruch 2, dadurch gekennzeichnet, daß der Verzögerungsspeicher ein Verzögerungskondensator (C6) ist, der über eine Triger-Diode (D9) einen Thyristor (T2) steuert, der in Reihenschaltung mit dem Primärschalter (T1) des Wechselrichters, der in dem Ladekreis des Verzögerungskondensators (C6) liegt, den Ladeschalter bildet, und daß der Sekundärschalter (T3) des Wechselrichters und eine Entladediode (D8) im Entladekreis des Verzögerungskondensators (C6) liegen.

4. Umrichter nach Anspruch 1, dadurch gekennzeichnet, daß unter Verwendung von Transistoren als Wechselrichterschalter die Durchsteuerung des Ladeschalters (T2', T2") abhängig von der Sperrspannung am Primärtransistor (T1) des Wechselrichters ist und daß der Entladekreis (D8', R65) des Verzögerungsspeichers (C6') über denselben Transistor (T1) geführt ist (Fig. 2 und 5).

5. Umrichter nach Anspruch 4, dadurch gekennzeichnet, daß die Durchsteuerung des Ladeschalters (T2', T2") abhängig von der Spannung an einem Kondensator (C7') eines kapazitiven Spannungsteilers (C7, C7') ist, der parallel zum Primärtransistor (T1) des Wechselrichters liegt.

6. Umrichter nach Anspruch 4 oder 5, gekennzeichnet durch einen den Ladeschalter (T2', T2") steuernden Komparator (S), der mit einem Eingang an dem als Kondensator ausgebildeten Verzögerungsspeicher (C6') und mit dem anderen Eingang an einem Spannungsteiler liegt, der dem Transistor (T1) des Wechselrichters parallel geschaltet ist, über den der Entladekreis des Verzögerungsspeichers (C6') geführt ist.

7. Umrichter nach einem der Ansprüche 1 bis 6, wobei das Tastverhältnis zur Erzeugung eines sinusförmigen Netzstromes von einer von der Halbwellenspannung des Gleichrichters abgeleiteten Korrekturgröße abhängig ist, dadurch gekennzeichnet, daß die Ladung des Verzögerungsspeichers (C6, C6') abhängig ist von einem Strom, der über eine dem Ladekondensator (C) parallel geschaltete Reihenschaltung eines Widerstandes (R1') und eines Kondensators (C4') fließt.

8. Umrichter nach Anspruch 7, dadurch gekennzeichnet, daß parallel zu der Reihenschaltung ein Widerstand (R62' ; R71) liegt.

9. Umrichter nach einem der Ansprüche 1 bis 8, dadurch gekennzeichnet, daß die positive Betriebsspannung für den Steuerteil von einem Speicherkondensator (C5) geliefert wird, der mit einer Entkopplungsdiode (D5) und einem Teiler-Kondensator (C7) einen kapazitiven Spannungsteiler parallel zum Primärschalter (T1) des Wechselrichters bildet.

10. Umrichter nach Anspruch 9, dadurch gekennzeichnet, daß die Reihenschaltung aus dem Speicherkondensator (C5) für die positive Betriebsspannung und einer Entkopplungsdiode (D5') einerseits und die Reihenschaltung eines Speicherkondensators (C11) für eine negative Betriebsspannung und einer Umschwingdrossel (L3) andererseits über einen Teiler-Kondensator (C5') dem Ladeschalter (T2, T2', T2") parallel geschaltet sind (Fig. 5).

11. Umrichter nach Anspruch 10, dadurch gekennzeichnet, daß der Speicherkondensator (C11) für die negative Betriebsspannung über eine Entkopplungsdiode (D27) einem Kondensator (C7') parallel geschaltet ist, der mit dem Teiler-Kondensator (C7) einen kapazitiven Spannungsteiler bildet, der parallel zu dem Primärtransistor (T1) des Wechselrichters geschaltet ist, wobei die Entkopplungsdiode (D27) so gepolt ist, daß sich der Teiler-Kondensator (C7) bei durchgesteuertem Primärtransistor (T1) in den Speicherkondensator (C11) entladen kann (Fig. 5).

## Claims

1. A converter

with a level regulator

having a charging capacitor (C) connected to an a. c. voltage network via a charging diode (D), a charging choke (L) and a rectifier (G) that supplies an unsmoothed half-wave voltage ;

having a charging switch (T2, T2') which connects the charging choke (D) to the rectifier (G) ;

having a control component which supplies a periodic control voltage whose pulse duty factor is dependent upon a control value to control the charging switch (T2, T2') ;

with an inverter

having two alternately-actuated switches, hereinafter referred to as a primary switch (T1) and a secondary switch (T3), arranged in a series circuit parallel to the charging capacitor (C) ;
where the switching frequency of the charging switch and of the switches of the inverter is greater than the frequency of the a. c. voltage network,
characterised in that
the control component for the charging switch (T2, T2', T2'') is synchronised by the rectangular voltage connected to one of the switches (T1, T3) of the inverter, and
that the pulse duty factor (V) relating the switch-on time (T$_L$) of the charging switch (T2, T2') to the switching period (T) is governed by the control value dependent charging time of a delay store (C6, C6') whose discharge circuit leads via a switch (T1 ; T3) of the inverter.

2. A converter as claimed in Claim 1, characterised in that the charging circuit of the delay store (C6) contains a charging resistor (R1), a decoupling diode (D7), one of the switches (T1) of the inverter, and an auxiliary voltage source, and that the latter is formed by a storage capacitor (C5) in parallel with a control transistor (T5) whose control is dependent upon the control value (Fig. 1).

3. A converter as claimed in Claim 2, characterised in that the delay store is a delay capacitor (C6) which controls via a trigger diode (D9) a thyristor (T2) in series with the primary switch (T1) of the inverter located in the charging circuit of the delay capacitor (C6) to form the charging switch, and that the secondary switch (T3) of the inverter and a discharge diode (D8) are located in the discharge circuit of the delay capacitor (C6).

4. A converter as claimed in Claim 1, characterised in that transistors are used as inverter switches, the actuation of the charging switch (T2', T2'') being dependent upon the blocking voltage connected to the primary transistor (T1) and that the discharge circuit (D8', R65) of the delay store (C6') leads across the same transistor (T1) (Fig. 2).

5. A converter as claimed in Claim 4, characterised in that the actuation of the charging switch (T2', T2'') is dependent upon the voltage connected to a capacitor (C7') of a capacitive voltage divider (C7, C7') arranged in parallel with the primary transistor (T1) of the inverter.

6. A converter as claimed in Claim 4 or 5, characterised by a comparator (S) which controls the charging switch (T2', T2'') and has one input connected to the delay store (C6') designed as a capacitor, and the other input connected to a voltage divider connected in parallel with that transistor (T1) of the inverter which is in the discharge circuit of the delay store (C6').

7. A converter as claimed in one of Claims 1 to 6, where the pulse duty factor for the generation of a sinusoidal mains current is dependent upon a correction value derived from the half-wave voltage of the rectifier, characterised in that the charging of the delay store (C6, C6') is dependent upon a current which flows via a resistor (R1') and a capacitor (C4') in a series arrangement connected in parallel with the charging capacitor (C).

8. A converter as claimed in Claim 7, characterised in that a resistor (R62' ; R71) is arranged in parallel with the series arrangement.

9. A converter as claimed in one of Claims 1 to 8, characterised in that the positive operating voltage for the control component is supplied by a storage capacitor (C5) connected with a decoupling diode (D5) and a divider capacitor (C7) to form a capacitive voltage divider in parallel with the primary switch (T1) of the inverter.

10. A converter as claimed in Claim 9, characterised in that the series arrangement of the storage capacitor (C5) for the positive operating voltage and a decoupling diode (D5') on the one hand, and the series arrangement of a storage capacitor (C11) for a negative operating voltage and a fly-back choke (L3) on the other hand, are. connected in parallel with the charging switch (T2, T2', T2'') via a divider capacitor (C5') (Fig. 5).

11. A converter as claimed in Claim 10, characterised in that the storage capacitor (C11) for the negative operating voltage is connected via a decoupling diode (D27) in parallel with a capacitor (C7') which, together with the divider capacitor (C7), forms a capacitive voltage divider connected in parallel with the primary transistor (T1) of the inverter, where the polarity of the decoupling diode (D27) is such that when the primary transistor (T1) is actuated the divider capacitor (C7) can discharge into the storage capacitor (C11) (Fig. 5).

**Revendications**

1. Convertisseur
comportant un régulateur élévateur de la tension comportant :
un condensateur de charge (C), qui est raccordé par l'intermédiaire d'une diode de charge (D), d'une bobine de charge (L) et d'un redresseur (G) à un réseau de tension alternative, le redresseur fournissant une tension redressée non lissée,
un commutateur de charge (T2, T2'), par l'intermédiaire duquel la bobine de charge (D) peut être raccordée au redresseur (G),
une partie de commande, qui délivre une tension de commande périodique servant à commander le commutateur de charge (T2, T2') et dont le rapport cyclique dépend d'une grandeur de commande,
et comportant un onduleur
comprenant deux commutateurs commandés en alternance, désignés ci-après sous le terme de commutateur primaire (T1) et commutateur secondaire (T3) et qui forment un circuit série en parallèle avec le condensateur de charge (C),
la fréquence de commutation du commutateur de charge et des commutateurs de l'onduleur étant supérieure à la fréquence du réseau à. tension alternative,
caractérisé en ce que
la partie de commande pour les commutateurs de charge (T2, T2', T2'') est synchronisée par la tension rectangulaire appliquée à l'un des commutateurs (T1, T3) de l'onduleur, et
que le rapport cyclique (V) correspondant au rapport de la durée de branchement ($T_L$) du commutateur de charge (T2, T2') à la durée (T) de la période est déterminé par la durée de charge, dépendant de la grandeur de commande, d'un accumulateur de retard (C6, C6'), dont le circuit de décharge inclut un commutateur (T1 ; T3) de l'onduleur.

2. Convertisseur suivant la revendication 1, caractérisé par le fait que le circuit de charge de l'accumulateur de retard (C6) contient une résistance de charge (R1), une diode de découplage (D7), l'un des commutateurs (T1) de l'onduleur ainsi qu'une source de tension auxiliaire, et que cette dernière est formée par un condensateur accumulateur d'énergie (C5) et par un transistor de commande (T5) branché en parallèle avec ce condensateur et qui est commandé par la grandeur de commande (figure 1).

3. Convertisseur suivant la revendication 2, caractérisé par le fait que l'accumulateur de retard est un condensateur de retard (C6) qui commande, par l'intermédiaire d'une diode de déclenchement (D9), un thyristor (T2) qui, en série avec le commutateur primaire (T1) de l'onduleur, qui est situé dans le circuit de charge du condensateur de retard (C6), forme le commutateur de charge, et que le commutateur secondaire (T3) de l'onduleur et une diode de décharge (D8) sont situés dans le circuit de décharge du condensateur de retard (C6).

4. Convertisseur suivant la revendication 1, caractérisé par le fait que dans le cas de l'utilisation de transistors en tant que commutateurs de l'onduleur, la commande du commutateur de charge (T2', T2'') dépend de la tension de blocage appliquée au transistor primaire (T1) de l'onduleur et que le circuit de décharge (D8', R65) de l'accumulateur de retard (C6') inclut le même transistor (T1) (figures 2 et 5).

5. Convertisseur suivant la revendication 4, caractérisé par le fait que la commande des commutateurs de charge (T2', T2'') est fonction de la tension appliquée à un condensateur (C7') d'un diviseur de tension capacitif (C7, C7') qui est parallèle au transistor primaire (T) de l'onduleur.

6. Convertisseur suivant la revendication 4 ou 5, caractérisé par un comparateur (S) commandant le commutateur de charge (T2', T2'') et qui est raccordé par une entrée à l'accumulateur de retard (C6') réalisé sous la forme d'un condensateur, et à l'autre entrée, un diviseur de tension qui est branché en parallèle avec le transistor (T1) de l'onduleur, que contient le circuit de décharge de l'accumulateur de retard (C6').

7. Convertisseur suivant l'une des revendications 1 à 6, dans lequel le rapport cyclique pour la protection d'un courant sinusoïdal du réseau dépend d'une grandeur correctrice dérivée de la tension demi-onde du redresseur, caractérisé par le fait que la charge de l'accumulateur de retard (C6, C6') dépend d'un courant qui passe dans un circuit série formé d'une résistance (R1') et d'un condensateur (C4') et qui est branchée en parallèle avec le condensateur de charge (C).

8. Convertisseur suivant la revendication 7, caractérisé par le fait qu'une résistance (R62' ; R71) est branché en parallèle avec le circuit série.

9. Convertisseur suivant l'une des revendications 1 à 8, caractérisé par le fait que la tension de fonctionnement positive pour la partie de commande est délivrée par un condensateur accumulateur d'énergie (C5) qui forme, avec une diode de découplage (D5) et avec un condensateur de division (C7), un diviseur de tension capacitif qui est en parallèle avec le commutateur primaire (T1) de l'onduleur.

10. Convertisseur suivant la revendication 9, caractérisé par le fait que le circuit série formé du condensateur accumulateur d'énergie (C5) pour la tension de fonctionnement positive et par une diode de découplage (D5'), d'une part, et le circuit série formé d'un condensateur accumulateur d'énergie (C11) pour une tension de fonctionnement négative et par une bobine inversion de polarité (L3) d'autre part sont branchés, par l'intermédiaire d'un condensateur de division (C5') en parallèle avec le commutateur de charge (T2, T2', T2'') (figure 5).

11. Convertisseur suivant la revendication 10, caractérisé par le fait que le condensateur accumulateur d'énergie (C11) pour la tension de fonctionnement négative est branché en parallèle, par l'intermédiaire d'une diode de découplage (D27), avec un condensateur (C7') qui forme avec le condensateur de division (C7) un diviseur de tension capacitif qui est branché en parallèle avec le transistor primaire (T1) de l'onduleur, la diode de découplage (27) étant polarisée de telle sorte que le condensateur (C7) du diviseur peut se décharger dans le condensateur accumulateur d'énergie (C11) lorsque le transistor primaire (T1) est placé à l'état conducteur (figure 5).

FIG1

FIG 2

0 085 073

FIG 3

FIG 4a

FIG 4b

FIG 4c

FIG4d

FIG 5